# EUROPEAN PATENT SPECIFICATION

(11) **EP 3 004 198 B1**
(45) Date of publication and mention of the grant of the patent: **12.07.2023**
(21) Application number: 14730104.8
(22) Date of filing: 28.05.2014
(51) Int. Cl.: C08G 18/66, C08G 18/76, C08G 18/02, C08G 18/42, C08L 75/06

(54) **SOFT THERMOPLASTIC POLYURETHANE ELASTOMERS AND PROCESS FOR THEIR PREPARATION**
WEICHE THERMOPLASTISCHE POLYURETHANELASTOMERE UND VERFAHREN ZU DEREN HERSTELLUNG
ÉLASTOMÈRES DE POLYURÉTHANE THERMOPLASTIQUE MOUS ET LEUR PROCÉDÉ DE PRÉPARATION

(30) Priority: 04.06.2013 WO PCT/CN2013/000670
(43) Date of publication of application: 13.04.2016
(73) Proprietor: BASF SE, 67056 Ludwigshafen am Rhein (DE)
(72) Inventor: YIN, DeHui, Shanghai 201208 (CN); CHEN, Bin-Eric, Shanghai 201100 (CN); NOMURA, Akira, Shanghai 200127 (CN); LIM, Tienkuan, Petaling BA (MY)
(74) Representative: BASF IP Association
(86) International application number: PCT/EP2014/061120
(87) International publication number: WO 2014/195211

(56) References cited:
- EP-A1- 0 950 674
- EP-A1- 1 234 844
- EP-A1- 1 849 814
- EP-A2- 0 630 926
- EP-A2- 1 932 863
- WO-A1-2010/125009
- WO-A1-2012/065926
- WO-A1-2012/173911
- WO-A2-01/72867
- WO-A2-2013/149956
- DE-A1- 10 037 622
- DE-A1- 10 109 302
- JP-A- 2006 070 129
- US-A- 3 761 439
- US-A- 4 261 946
- US-A1- 2005 107 562
- US-A1- 2005 261 447
- US-A1- 2009 100 723
- US-A1- 2010 047 550
- US-A1- 2010 239 803
- US-A1- 2011 003 961
- US-A1- 2011 275 733

## Description

### Technical Field

The present invention relates to a one-step process for preparing very soft thermoplastic polyurethane elastomers (TPUs) which comprise substantially no plasticizers and have a Shore A hardness of 60 or less, and respective TPU, which can be molded to TPU articles in practicable processing cycles.

### Background Art

Thermoplastic polyurethane elastomers (TPUs) have been known for a long time. They are of industrial importance because of the combination of good mechanical properties with the known advantages of inexpensive, thermoplastic processability. A wide range of mechanical properties can be achieved by using various chemical builder components. An overview of TPUs, their properties and uses is given, e.g., in Kunststoffe 68 (1978), 819 or in Kautschuk, Gummi, Kunststoffe 35 (1982), 568.

TPUs are generally built up from polyols (usually polyester or polyether polyols), diisocyanates (usually organic diisocyanate) and short-chain diols (chain extenders). The hardness of a TPU is largely determined by the ratio of hard segment (formed by reaction of the chain extender with the diisocyanate groups) to soft segment (formed by reaction of the polyol with the diisocyanate groups). If the amount of hard segment is reduced so that the hardness of TPU is reduced downwards beyond the limit of 80 Shore A, the resulting products are usually tacky, solidify poorly, exhibit poor releasability from the mold in injection molding processing and exhibit severe shrinkage. No economically acceptable injection molding cycle times are ensured with such TPU.

At present, the soft TPU in the market is dominated by plasticized soft TPU. However, those plasticized TPUs show many disadvantages. Plasticizers can bloom or be extracted from such compositions in which case the hardness of the composition can increase to an undesirable level. The use of certain plasticizers has also come under scrutiny from environmental and toxicological standpoints. Accordingly, eliminating the need for plasticizers in TPU compositions would normally be deemed to be advantageous if desired physical characteristics could be attained without them.

Another kind of soft TPU is plasticizer-free soft TPU. However, the products with hardness of less than 60 Shore A are virtually absent from the market despite a high demand. The reason is that either the processes are too costly or the mechanical properties of such a TPU are not sufficient to be able to survive in the market.

US 8183330B2 has disclosed a soft, plasticizer-free TPU and preparation thereof. The TPU has a Shore A hardness of less than 75, preferably less than 70, and most preferably less than 65, and are essentially free of and preferably void of plasticizers. It is made from raw material comprising a hydroxyl terminated intermediate derived from a branched glycol or comprised of at least 2 different repeating units, and includes 10-40 weight percent of hard segments.

US 6790916B2 has disclosed a process for the preparation of TPU which has a Shore A hardness of 45 to 65 and can be easily released from the mold. For the preparation, a complex three-step process comprising pre-polymerization is employed.

EP 1932863A2 has disclosed a soft TPU and preparation thereof. The TPU has a Shore A hardness of 45 to 80 and good releasability. It is made in a single-stage reaction in which a branched polyester diol is used.

US 8138299B2 has disclosed a TPU comprising no plasticizers and having a Shore A hardness of from 50 to 80. The TPU is made from raw materials comprising two kinds of polyester diols, in which one is based on butane-1,4-diol and at least one further diol having at least 5 carbon atoms, and the other is based on butane-1,4-diol and at least one further diol having two or three carbon atoms.

### Contents of the Invention

It is thus an object of the present invention to develop a formulation for soft TPU having a Shore A hardness of 60 or less, preferably from 55 to 30 and even more preferably from 50 to 35 which comprises substantially no plasticizer using conventional production methods. The Shore A hardness is measured according to DIN 53505 as indicated in the examples.

It is also an object of the present invention to provide above soft TPU comprising substantially no plasticizer which can be molded by injection molding, extrusion or other molding methods in practicable processing cycles to give finished products.

The inventors surprisingly found that TPU having a Shore A hardness of 60 or less can be made from linear polyol, organic diisocyanate and glycol chain extender in a one-step reaction. The shore hardness is measured according to DIN 53505 in which the hardness value is read off 3 seconds after the pressure foot comes in contact with test specimen. Specifically, the one-step process includes synthesizing TPU by polymerization of i) linear polyol, ii) organic diisocyanate and iii) glycol chain extender comprising ethylene glycol or 1,3-propanediol, or mixtures thereof; eventually further comprising 1,4-butanediol, 1,5-pentanediol, and/or 1,6-hexandiol in an amount of not more than 10 mole percent of the total moles of the chain extenders used, wherein the linear polyol (i) is a polyester polyol derived from adipic acid and 1,3-propanediol (poly(1,3-propylene adipate) diol) and has a number average molecular weight within the range of from 1.5 × 10³ g/mol to 4.0 × 10³ g/mol, or is derived from adipic acid and ethylene glycol and 1,4-butanediol (polyethylene 1,4-butylene adipate) diol) and has a number average molecular weight within the range of from 2.2 × 10³ g/mol to 4.0 × 10³ g/mol.

It was also found that the TPU thus produced can be molded to TPU particles in practicable processing cycles. Although the TPU compositions of this invention are very soft in nature, they offer the advantage of having little tendency to stick to molds. Accordingly, they are highly advantageous for utilization in injection molding application. Moreover, the TPU articles molded have good low-temperature properties and good mechanical properties, and do not harden substantially at low temperature, such as lower than -10°C.

### Modes of carrying out the invention

In a first aspect, the present invention provides a one-step process for preparing TPU having a Shore A hardness of 60 or less, preferably from 55 to 30, and even more preferably from 50 to 35, comprising synthesizing TPU by polymerization of i) linear polyol, ii) organic diisocyanate and iii) glycol chain extender mainly comprising ethylene glycol or 1,3-propanediol,, or mixtures thereof; eventually further comprising 1,4-butanediol, 1,5-pentanediol, and/or 1,6-hexandiol in an amount of not more than 10 mole percent of the total moles of the chain extenders used, wherein the linear polyol (i) is a polyester polyol derived from adipic acid and 1,3-propanediol (poly(1,3-propylene adipate) diol) and has a number average molecular weight within the range of from 1.5 × 10³ g/mol to 4.0 × 10³ g/mol, or is derived from adipic acid and ethylene glycol and 1,4-butanediol (polyethylene 1,4-butylene adipate) diol) and has a number average molecular weight within the range of from 2.2 × 10³ g/mol to 4.0 × 10³ g/mol.

The content of hard segment in the formed TPU is from 5 weight percent to 14 weight percent, preferably from 6 weight percent to 12 weight percent, and even more preferably from 7 weight percent to 10 weight percent.

The linear polyol (i) used for making the TPU of this invention is polyester polyol derived from dicarboxylic acid and diols, wherein the dicarboxylic acid is adipic acid.

The polyester polyol is derived from adipic acid and 1,3-propanediol (poly(1,3-propylene adipate) diol, PPA) or is derived from adipic acid and ethylene glycol and 1,4-butanediol (polyethylene 1,4-butylene adipate) diol, PEBA). In the PEBA, the molar ratio of ethylene glycol to 1,4-butanediol is preferably from 0.5:1 to 1.5:1, particularly preferably from 0.75:1 to 1.25:1.

The linear polyol is polyester polyol derived from one kind of aliphatic dicarboxylic acid and one kind of aliphatic diol and has a number average molecular weight of from 1.5 × 10³ to 4.0 × 10³, and more preferably from 1.8 × 10³ to 3.5 × 10³.

All molecular weights specified in this text have the unit of [g/mol] and refer, unless indicated otherwise, to the number average molecular weight (Mn).

The organic diisocyanate (ii) used for making the TPU of this invention is either aliphatic diisocyanate or aromatic diisocyanate. The aliphatic diisocyanates include tri-, tetra-, penta-, hexa-, hepta- and/or octa-methylene diisocyanate, 2-methylpentamethylene 1,5-diisocyanate, 2-ethylbutylene 1,4-diisocyanate, pentamethylene 1,5-diisocyanate, butylene 1,4-diisocyanate. The aromatic diisocyanates include diphenylmethane 2,2'-, 2,4'- and/or 4,4'-diisocyanate (MDI), naphthylene 1,5-diisocyanate (NDI), tolylene 2,4- and/or 2,6-diisocyanate (TDI), 3,3'-dimethyldiphenyl diisocyanate, 1,2-diphenylethane diisocyanate and/or phenylene diisocyanate.

Even though aliphatic diisocyanate can be utilized, aromatic diisocyanate is highly preferred. In a particularly preferred embodiment, the organic diisocyanate is a diisocyanate which comprises at least 90 weight percent, more preferably at least 95 weight percent, particularly preferably at least 99 weight percent, of 4,4'-diphenylmethane diisocyanate (4,4'-MDI).

The glycol chain extender (iii) used for making the TPU of this invention is ethylene glycol or 1,3-propanediol, or mixtures thereof. The glycol chain extender may also comprise, in addition to ethylene glycol and 1,3-propanediol, small amount of 1,4-butanediol, 1,5-pentanediol, and/or 1,6-hexanediol, for example, in an amount of not more than 10 mole percent of the total moles of the chain extenders used. However, it is highly preferred to utilize only ethylene glycol and/or 1,3-propanediol as the chain extender, and the most preferred chain extender is ethylene glycol.

In a particularly preferred embodiment, poly(1,3-propylene adipate) diol is used as component i), 4,4'-MDI is used as component ii), and ethylene glycol is used as component iii) for making the TPU of this invention, wherein the poly(1,3-propylene adipate) diol preferably has a number average molecular weight of higher than 1.5 × 10³ and more preferably higher than 1.8 × 10³. In another particularly preferred embodiment, polyethylene 1,4-butylene adipate) diol is used as component i), 4,4'-MDI is used as component ii), and ethylene glycol is used as component iii) for making the TPU of this invention, wherein the polyethylene 1,4-butylene adipate) diol preferably has a number average molecular weight of higher than 2.2 × 10³ and more preferably higher than 2.5 × 10³.

In the above two preferred embodiments, ethylene glycol as chain extender is used in an amount of from 1.0 weight percent to 2.8 weight percent, preferably from 1.2 weight percent to 2.4 weight percent, and most preferably from 1.4 weight percent to 2.0 weight percent of the total weight of the TPU composition.

Conventional monofunctional compounds such as chain terminators or mold release aids, may also be added in small amounts. Examples of suitable monofunctional compounds include alcohols such as octanol and stearyl alcohol, and amines, such as butylamine and stearylamine.

It is often desirable to utilize catalysts such as stannous or other metal carboxylates as well as tertiary amine. Examples of metal carboxylates catalysts include stannous octanoate, dibutyl tin dilaurate, phenyl mercuric propionate, lead octanoate, iron acetylacetonate, magnesium acetylacetonate. Examples of tertiary amine catalysts include triethylene diamine. The amount of the one or more catalysts is low, generally from 10 to 100 parts by weight per million parts by weight of the final TPU polymer formed.

In addition to the TPU components and the catalyst, customary auxiliaries and/or additives can also be added. Some examples which may be mentioned include lubricants and demolding agents, flame proofing agents, nucleating agents, oxidation stabilizers, hydrolysis stabilizers, dyes and pigments, inorganic and/or organic fillers and reinforcing agents. In a preferred embodiment, lubricant such as fatty acid ester and/or fatty acid amide is used. In another preferred embodiment, hydrolysis stabilizer, such as oligomeric and/or polymeric aliphatic or aromatic carbodiimide is used. In this context, "substantially no plasticizer" means that plasticizers may be optionally used in an amount of less than 5 weight percent of the total weight of the TPU composition. In a further preferred embodiment, however, no plasticizer is used. If the TPU according to the invention is exposed to thermal oxidative damage during its use, antioxidants may be added, in which phenolic antioxidants are preferably used. The auxiliaries and/or additives may be added during the reaction to form the TPU or in a second compounding step.

To prepare the TPU, the building components can be reacted in amounts such that the equivalent molar ratio of NCO groups to the sum of the groups reactive towards NCO, in particular the OH groups in chain extenders and polyols, is from 0.9:1.0 to 1.1:1.0, preferably from 0.95:1.0 to 1.05 to 1.0, and more preferably from 0.97: 1.0 to 1.03 to 1.0.

The TPUs of this invention can be prepared continuously or batchwise. The best known industrial processes for the production of TPU are the belt process and the extruder process. During the process, components i), ii) and iii) can be added either simultaneously or in any sequence. In a preferred embodiment, component i) is premixed with component iii) and fed to the reactor as a blend, and component ii) is added separately to the reactor. During the polymerization, the reaction temperature is generally controlled in a range of from 100°C to 300°C, preferably from 150°C to 230°C. The TPU thus prepared is cooled and pelletized. Pelletizing can be carried out by any pelletizing method known in the art.

In the second aspect of the invention, TPU having a Shore A hardness of 60 or less, preferably from 55 to 30, and more preferably from 50 to 35 which is prepared by the above process is provided.

In the third aspect of the invention, processes for manufacturing molded articles using the TPUs prepared by the above process are provided. For example, injection molding, extrusion, calendering or blow molding can be used for manufacturing the molded articles, and injection molding is preferred. The process for manufacturing molded articles using the TPUs by injection molding comprises (a) heating the TPU to a temperature above its melting point; (b) injecting the melted TPU into a mold; (c) cooling the TPU in the mold to a temperature below its solidification temperature to produce the molded articles; and (d) removing the molded article from the mold. During processing by injection molding, the TPUs solidify rapidly and are therefore easily removed from the mold.

The TPUs of this invention have good mechanical properties. The TPUs of this invention also have good elastic properties even at low temperature (i.e. no soft segment crystallization), which is manifested by a low increase in hardness after being subjected to temperature lower than 0°C or even lower than -10°C for a period.

This invention is illustrated by the following examples that are merely for the purpose of illustration and are not to be regarded as limiting the scope of the invention or the manner in which it can be practiced.

### Examples

The following methods and criteria are used in determination and evaluation of each parameter.

### Shore A hardness

Shore A hardness is measured according to DIN 53505 in which the hardness value is read off 3 seconds after the pressure foot comes in contact with the test specimen. The hardness is indicated as Shore A hardness (3 sec) in the following text.

### Tensile strength

Tensile strength is determined according to DIN 53504, in which S2 test bars are used for the measurement.

### Elongation at break

Elongation at break is determined according to DIN 53504, in which S2 test bars are used for the measurement.

### Abrasion loss

Abrasion loss is determined according to DIN 53516.

All the test specimens are annealed at 100°C for 20 hours after the demolding, and then conditioned at 23°C for at least 16 hours before the measurement.

Hardness increase at low temperature is determined as the hardness increase value of the annealed test specimens mentioned above after being treated at the low temperature of -30°C for 48 hours and then conditioned at 23°C for 24 hours. If the increase in Shore A hardness is less than 5, it is defined that the test specimens have low hardness increase at low temperature.

### Example 1

229.18 g of 4,4'-MDI, 35.18 g of ethylene glycol and 1000 g of a polyester polyol having a number average molar weight of 3.0 × 10³ g/mol derived from adipic acid and ethylene glycol and 1,4-butanediol (PEBA), in which ethylene glycol and 1,4-butanediol is in a molar ratio of 1:1, are processed in a reaction extruder to synthesize TPU. Furthermore, 8 g of a hydrolysis stabilizer (oligomeric carbodiimide derived from tetramethylxylyl diisocyanate (TMXDI) , e.g. Elastostab H01 from BASF), 2.54 g of an antioxidant (hindered phenol derived from tetramethylxylene and polyethylene glycol, e.g. Irganox 1010 from BASF) and 3.82 g of a lubricant (ester wax on the basis of montanic acids, e.g. Licowax E from Clariant) have been added. The TPU granules prepared are converted by injection molding into test specimens.

### Example 2

184.15 g of 4,4'-MDI, 24.01 g of ethylene glycol and 1000 g of a polyester polyol having a number average molar weight of 3.0 × 10³ g/mol derived from adipic acid and ethylene glycol and 1,4-butanediol (PEBA), in which ethylene glycol and 1,4-butanediol is in a molar ratio of 1:1, are processed in a reaction extruder to synthesize TPU. Furthermore, 8 g of a hydrolysis stabilizer (oligomeric carbodiimide derived from TMXDI, e.g. Elastostab H01 from BASF), 2.43 g of an antioxidant (hindered phenol derived from tetramethylxylene and polyethylene glycol, e.g. Irganox 1010 from BASF) and 6.08 g of a lubricant (ester wax on the basis of montanic acids, e.g. Licowax E from Clariant) have been added. The TPU granules prepared are converted by injection molding into test specimens.

### Example 3

163 g of 4,4'-MDI, 18.79 g of ethylene glycol and 1000 g of a polyester polyol having a number average molar weight of 3.0 × 10³ g/mol derived from adipic acid and ethylene glycol and 1,4-butanediol (PEBA), in which ethylene glycol and 1,4-butanediol is in a molar ratio of 1:1, are processed in a reaction extruder to synthesize TPU. Furthermore, 8 g of a hydrolysis stabilizer (oligomeric carbodiimide derived from TMXDI, e.g. Elastostab H01 from BASF), 2.38 g of an antioxidant (hindered phenol derived from tetramethylxylene and polyethylene glycol, e.g. Irganox 1010 from BASF) and 5.95 g of a lubricant (ester wax on the basis of montanic acids, e.g. Licowax E from Clariant) have been added. The TPU granules prepared are converted by injection molding into test specimens.

The results of mechanical tests of the samples prepared in examples 1 to 3 are shown in Table 1.

**Table 1**

| Example | Shore A hardness (3 sec) | Tensile strength, MPa | Elongation at break, % | Abrasion loss, mm³ | Hardness increase at low temperature |
|---|---|---|---|---|---|
| 1 | 58 | 43 | 924 | 50 | 1 |
| 2 | 50 | 28 | 1024 | 83 | 2 |
| 3 | 41 | 22 | 1443 | 216 | 2 |

During processing by injection molding, samples prepared by examples 1 to 3 can be easily removed from the mold. As can be seen from Table 1, they all show Shore A hardness (3 sec) of less than 60, together with satisfactory mechanical properties. Moreover, they all show low hardness increase after being stored at low temperature.

### Example 4

276.33 g of 4,4'-MDI, 36.53 g of ethylene glycol and 1000 g of a polyester polyol having a number average molar weight of 2.0 × 10³ g/mol derived from adipic acid and 1,3-propanediol (PPA), are processed in a reaction extruder to synthesize TPU. Furthermore, 8 g of a hydrolysis stabilizer (oligomeric carbodiimide derived from TMXDI, e.g. Elastostab H01 from BASF), 2.64 g of an antioxidant (hindered phenol derived from tetramethylxylene and polyethylene glycol, e.g. Irganox 1010 from BASF) and 3.96 g of a lubricant (ester wax on the basis of montanic acids, e.g. Licowax E from Clariant) have been added. The TPU granules prepared are converted by injection molding into test specimens.

### Example 5

229.53 g of 4,4'-MDI, 24.93 g of ethylene glycol and 1000 g of a polyester polyol having a number average molar weight of 2.0 × 10³ g/mol derived from adipic acid and 1,3-propanediol (PPA), are processed in a reaction extruder to synthesize TPU. Furthermore, 8 g of a hydrolysis stabilizer (oligomeric carbodiimide derived from TMXDI, e.g. Elastostab H01 from BASF), 2.53 g of an antioxidant (hindered phenol derived from tetramethylxylene and polyethylene glycol, e.g. Irganox 1010 from BASF) and 6.31 g of a lubricant (ester wax on the basis of montanic acids, e.g. Licowax E from Clariant) have been added. The TPU granules prepared are converted by injection molding into test specimens.

### Example 6

207.72 g of 4,4'-MDI, 19.51 g of ethylene glycol and 1000 g of a polyester polyol having a number average molar weight of 2.0 × 10³ g/mol derived from adipic acid and 1,3-propanediol (PPA), are processed in a reaction extruder to synthesize TPU. Furthermore, 8 g of a hydrolysis stabilizer (oligomeric carbodiimide derived from TMXDI, e.g. Elastostab H01 from BASF), 2.47 g of an antioxidant (hindered phenol derived from tetramethylxylene and polyethylene glycol, e.g. Irganox 1010 from BASF) and 6.18 g of a lubricant (ester wax on the basis of montanic acids, e.g. Licowax E from Clariant) have been added. The TPU granules prepared are converted by injection molding into test specimens.

The results of mechanical tests of the samples prepared in examples 4 to 6 are shown in Table 2.

**Table 2**

| Example | Shore A hardness (3 sec) | Tensile strength, MPa | Elongation at break, % | Abrasion loss, mm³ | Hardness increase at low temperature |
|---|---|---|---|---|---|
| 4 | 59 | 40 | 813 | 67 | 1 |
| 5 | 51 | 31 | 995 | 104 | 2 |
| 6 | 42 | 19 | 1117 | 247 | 3 |

During processing by injection molding, samples prepared by examples 4 to 6 can be easily removed from the mold. As can be seen from Table 2, they all show Shore A hardness (3 sec) of less than 60, together with satisfactory mechanical properties. Moreover, they all show low hardness increase after being stored at low temperature.

## Claims

1. A thermoplastic polyurethane which comprises substantially no plasticizers and has a Shore A hardness of 60 or less measured according to DIN 53505 in which the hardness value is read off 3 seconds after the pressure foot comes in contact with test specimen, and which is prepared by a one-step reaction of i) linear polyol, ii) organic diisocyanate and iii) glycol chain extender comprising ethylene glycol or 1,3-propanediol, or mixtures thereof; eventually further comprising 1,4-butanediol, 1,5-pentanediol, and/or 1,6-hexandiol in an amount of not more than 10 mole percent of the total moles of the chain extenders used, wherein the linear polyol (i) is a polyester polyol derived from adipic acid and 1,3-propanediol (poly(1,3-propylene adipate) diol) and has a number average molecular weight within the range of 1.5 × 10³ g/mol to 4.0 × 10³ g/mol, or is derived from adipic acid and ethylene glycol and 1,4-butanediol (polyethylene 1,4-butylene adipate) diol) and has a number average molecular weight within the range of from 2.2 × 10³ g/mol to 4.0 × 10³ g/mol.

2. A thermoplastic polyurethane according to claim 1, wherein the thermoplastic polyurethane has a Shore A hardness of from 55 to 30 measured according to DIN 53505 in which the hardness value is read off 3 seconds after the pressure foot comes in contact with test specimen.

3. A thermoplastic polyurethane according to claim 2, wherein the thermoplastic polyurethane has a Shore A hardness of from 50 to 35 measured according to DIN 53505 in which the hardness value is read off 3 seconds after the pressure foot comes in contact with test specimen.

4. A thermoplastic polyurethane according to any one of claims of 1 to 3, wherein the polyester polyol is polyethylene 1,4-butylene adipate) diol and has a number average molecular weight of from 2.5 × 10³ g/mol to 3.5 × 10³ g/mol.

5. A thermoplastic polyurethane according to any one of claims of 1 to 3, wherein the polyester polyol poly(1,3)-propylene adipate) diol has a number average molecular weight of from 1.8 × 10³ g/mol to 3.5 × 10³ g/mol.

6. A thermoplastic polyurethane according to claim 1, wherein the organic diisocyanate is aromatic diisocyanate.

7. A thermoplastic polyurethane according to claim 6, wherein the organic diisocyanate is diphenylmethane diisocyanate.

8. A thermoplastic polyurethane according to claim 7, wherein the organic diisocyanate is 4,4'-diphenylmethane diisocyanate.

9. A thermoplastic polyurethane according to claim 1, wherein the glycol chain extender is ethylene glycol.

10. A thermoplastic polyurethane according to any one of claims 1 to 3, wherein the glycol chain extender is ethylene glycol; wherein the organic diisocyanate is 4,4'-diphenylmethane diisocyanate; and wherein the linear polyol is derived from adipic acid and 1,3-propanediol (poly(1,3-propylene adipate) diol) and has a number average molecular weight of from 1.5 × 10³ to 4.0 × 10³ g/mol, and more preferably from 1.8 × 10³ g/mol to 3.5 × 10³ g/mol.

11. A thermoplastic polyurethane according to any one of claims 1 to 3, wherein the glycol chain extender is ethylene glycol; wherein the organic diisocyanate is 4,4'-diphenylmethane diisocyanate; and wherein the linear polyol is derived from adipic acid and ethylene glycol and 1,4-butanediol (polyethylene 1,4-butylene adipate) diol) and has a number average molecular weight of from 2.2 × 10³ g/mol to 4.0 × 10³ g/mol, and more preferably from 2.5 × 10³ g/mol to 3.5 × 10³ g/mol.

12. A thermoplastic polyurethane according to any one of claims 9 to 11, wherein ethylene glycol as chain extender is used in an amount of from 1.0 weight percent to 2.8 weight percent of the total weight of the thermoplastic polyurethane.

13. A thermoplastic polyurethane according to claim 12, wherein ethylene glycol is used in an amount of from 1.2 weight percent to 2.4 weight percent of the total weight of the thermoplastic polyurethane.

14. A thermoplastic polyurethane according to claim 13, wherein ethylene glycol is used in an amount of from 1.4 weight percent to 2.0 weight percent of the total weight of the thermoplastic polyurethane.

15. A process for preparing molded articles of thermoplastic polyurethane, comprising molding the thermoplastic polyurethane according to any one of claims 1 to 14 by injection molding or extrusion.

16. A one-step process for preparing thermoplastic polyurethane having a Shore A hardness of 60 or less measured according to DIN 53505 in which the hardness value is read off 3 seconds after the pressure foot comes in contact with test specimen, comprising synthesizing the thermoplastic polyurethane by polymerization i) linear polyol, ii) organic diisocyanate and iii) glycol chain extender mainly comprising ethylene glycol or 1,3-propanediol, or mixtures thereof; eventually further comprising 1,4-butanediol, 1,5-pentanediol, and/or 1,6-hexandiol in an amount of not more than 10 mole percent of the total moles of the chain extenders used; wherein the linear polyol (i) is a polyester polyol derived from adipic acid and 1,3-propanediol (poly(1,3-propylene adipate) diol) and has a number average molecular weight within the range of 1.5 × 10³ g/mol to 4.0 × 10³ g/mol, or is derived from adipic acid and ethylene glycol and 1,4-butanediol (polyethylene 1,4-butylene adipate) diol) and has a number average molecular weight within the range of from 2.2 × 10³ g/mol to 4.0 × 10³ g/mol.

17. A process according to claim 16 with any of the additional features of one of the claims 2 to 14.

## Patentansprüche

1. Thermoplastisches Polyurethan, das weitgehend weichmacherfrei ist und eine gemäß DIN 53505 gemessene Shore-A-Härte von 60 oder weniger aufweist, wobei der Härtewert 3 Sekunden nach dem Inkontaktkommen des Druckfußes mit dem Prüfkörper abgelesen wird, und das durch eine einstufige Reaktion von i) linearem Polyol, ii) organischem Diisocyanat und iii) Glykol-Kettenverlängerer, der Ethylenglykol oder 1,3-Propandiol oder Mischungen davon umfasst und gegebenenfalls ferner 1,4-Butandiol, 1,5-Pentandiol und/oder 1,6-Hexandiol in einer Menge von nicht mehr als 10 Molprozent der gesamten Mole der verwendeten Kettenverlängerer umfasst, hergestellt wird; wobei das lineare Polyol (i) ein von Adipinsäure und 1,3-Propandiol abgeleitetes Polyesterpolyol (Poly-(1,3-propylenadipat)diol) ist und ein zahlenmittleres Molekulargewicht im Bereich von 1,5 × 10³ g/mol bis 4,0 × 10³ g/mol aufweist oder von Adipinsäure und Ethylenglykol und 1,4-Butandiol abgeleitet ist (Poly(ethylen-1,4-butylenadipat)diol) und ein zahlenmittleres Molekulargewicht im Bereich von 2,2 × 10³ g/mol bis 4,0 × 10³ g/mol aufweist.

2. Thermoplastisches Polyurethan nach Anspruch 1, wobei das thermoplastische Polyurethan eine gemäß DIN 53505 gemessene Shore-A-Härte von von 55 bis 30 aufweist, wobei der Härtewert 3 Sekunden nach dem Inkontaktkommen des Druckfußes mit dem Prüfkörper abgelesen wird.

3. Thermoplastisches Polyurethan nach Anspruch 2, wobei das thermoplastische Polyurethan eine gemäß DIN 53505 gemessene Shore-A-Härte von von 50 bis 35 aufweist, wobei der Härtewert 3 Sekunden nach dem Inkontaktkommen des Druckfußes mit dem Prüfkörper abgelesen wird.

4. Thermoplastisches Polyurethan nach einem der Ansprüche 1 bis 3, wobei das Polyesterpolyol Poly(ethylen-1,4-butylenadipat)diol ist und ein zahlenmittleres Molekulargewicht im Bereich von 2,5 × 10³ g/mol bis 3,5 × 10³ g/mol aufweist.

5. Thermoplastisches Polyurethan nach einem der Ansprüche 1 bis 3, wobei das Polyesterpolyol Poly-(1,3-propylenadipat)diol ein zahlenmittleres Molekulargewicht im Bereich von 1,8 × 10³ g/mol bis 3,5 × 10³ g/mol aufweist.

6. Thermoplastisches Polyurethan nach Anspruch 1, wobei es sich bei dem organischen Diisocyanat um aromatisches Diisocyanat handelt.

7. Thermoplastisches Polyurethan nach Anspruch 6, wobei es sich bei dem organischen Diisocyanat um Diphenylmethandiisocyanat handelt.

8. Thermoplastisches Polyurethan nach Anspruch 7, wobei es sich bei dem organischen Diisocyanat um 4,4'-Diphenylmethandiisocyanat handelt.

9. Thermoplastisches Polyurethan nach Anspruch 1, wobei es sich bei dem Glykol-Kettenverlängerer um Ethylenglykol handelt.

10. Thermoplastisches Polyurethan nach einem der Ansprüche 1 bis 3, wobei es sich bei dem Glykol-Kettenverlängerer um Ethylenglykol handelt; wobei es sich bei dem organischen Diisocyanat um 4,4'-Diphenylmethandiisocyanat handelt; und wobei das lineare Polyol von Adipinsäure und 1,3-Propandiol abgeleitet ist (Poly(1,3-propylenadipat)diol) und ein zahlenmittleres Molekulargewicht im Bereich von 1,5 × 10³ g/mol bis 4,0 × 10³ g/mol und weiter bevorzugt von 1,8 × 10³ g/mol bis 3,5 × 10³ g/mol aufweist.

11. Thermoplastisches Polyurethan nach einem der Ansprüche 1 bis 3, wobei es sich bei dem Glykol-Kettenverlängerer um Ethylenglykol handelt; wobei es sich bei dem organischen Diisocyanat um 4,4'-Diphenylmethandiisocyanat handelt; und wobei das lineare Polyol von Adipinsäure und Ethylenglykol und 1,4-Butandiol abgeleitet ist (Poly(ethylen-1,4-butylenadipat)diol) und ein zahlenmittleres Molekulargewicht im Bereich von 2,2 × 10³ g/mol bis 4,0 × 10³ g/mol und weiter bevorzugt von 2,5 × 10³ g/mol bis 3,5 × 10³ g/mol aufweist.

12. Thermoplastisches Polyurethan nach einem der Ansprüche 9 bis 11, wobei Ethylenglykol als Kettenverlängerer in einer Menge von 1,0 Gewichtsprozent bis 2,8 Gewichtsprozent des Gesamtgewichts des thermoplastischen Polyurethans verwendet wird.

13. Thermoplastisches Polyurethan nach Anspruch 12, wobei Ethylenglykol in einer Menge von 1,2 Gewichtsprozent bis 2,4 Gewichtsprozent des Gesamtgewichts des thermoplastischen Polyurethans verwendet wird.

14. Thermoplastisches Polyurethan nach Anspruch 13, wobei Ethylenglykol in einer Menge von 1,4 Gewichtsprozent bis 2,0 Gewichtsprozent des Gesamtgewichts des thermoplastischen Polyurethans verwendet wird.

15. Verfahren zur Herstellung von Formkörpern aus thermoplastischem Polyurethan, bei dem man das thermoplastische Polyurethan nach einem der Ansprüche 1 bis 14 durch Spritzguss oder Extrusion formt.

16. Einstufiges Verfahren zur Herstellung von thermoplastischem Polyurethan, das eine gemäß DIN 53505 gemessene Shore-A-Härte von 60 oder weniger aufweist, wobei der Härtewert 3 Sekunden nach dem Inkontaktkommen des Druckfußes mit dem Prüfkörper abgelesen wird, bei dem man das thermoplastische Polyurethan durch Polymerisation von i) linearem Polyol, ii) organischem Diisocyanat und iii) Glykol-Kettenverlängerer, der hauptsächlich Ethylenglykol oder 1,3-Propandiol oder Mischungen davon umfasst und gegebenenfalls ferner 1,4-Butandiol, 1,5-Pentandiol und/oder 1,6-Hexandiol in einer Menge von nicht mehr als 10 Molprozent der gesamten Mole der verwendeten Kettenverlängerer umfasst, synthetisiert; wobei das lineare Polyol (i) ein von Adipinsäure und 1,3-Propandiol abgeleitetes Polyesterpolyol (Poly-(1,3-propylenadipat)diol) ist und ein zahlenmittleres Molekulargewicht im Bereich von 1,5 × 10³ g/mol bis 4,0 × 10³ g/mol aufweist oder von Adipinsäure und Ethylenglykol und 1,4-Butandiol abgeleitet ist (Poly(ethylen-1,4-butylenadipat)diol) und ein zahlenmittleres Molekulargewicht im Bereich von 2,2 × 10³ g/mol bis 4,0 × 10³ g/mol aufweist.

17. Verfahren nach Anspruch 16 mit einem der zusätzlichen Merkmale eines der Ansprüche 2 bis 14.

## Revendications

1. Polyuréthane thermoplastique qui ne comprend pratiquement aucun plastifiant et a une dureté Shore A de 60 ou moins, mesurée selon la méthode DIN 53505 dans laquelle la valeur de dureté est lue 3 secondes après que le sabot de pression entre en contact avec l'éprouvette, et qui est préparé en faisant réagir en une seule étape i) un polyol linéaire, ii) un diisocyanate organique, et iii) un agent d'extension de chaîne glycol comprenant de l'éthylène glycol ou du 1,3-propanediol ou des mélanges de ceux-ci ; éventuellement comprenant en outre du 1,4-butanediol, du 1,5-pentanediol, et/ou du 1,6-hexanediol en une quantité de pas plus de 10 pour cent en moles du nombre total de moles des agents d'extension de chaîne utilisés, dans lequel le polyol linéaire (i) est un polyester polyol dérivé d'acide adipique et de 1,3-propanediol (poly(adipate de 1,3-propylène)diol) et a une masse moléculaire moyenne en nombre dans la plage de 1,5 × 10³ g/mol à 4,0 × 10³ g/mol, ou est dérivé d'acide adipique et d'éthylène glycol et de 1,4-butanediol (poly(éthylène-adipate de 1,4-butylène)diol) et a une masse moléculaire moyenne en nombre dans la plage de 2,2 × 10³ g/mol à 4,0 × 10³ g/mol.

2. Polyuréthane thermoplastique selon la revendication 1, le polyuréthane thermoplastique ayant une dureté Shore A de 55 à 30, mesurée selon la méthode DIN 53505 dans laquelle la valeur de dureté est lue 3 secondes après que le sabot de pression entre en contact avec l'éprouvette.

3. Polyuréthane thermoplastique selon la revendication 2, le polyuréthane thermoplastique ayant une dureté Shore A de 50 à 35, mesurée selon la méthode DIN 53505 dans laquelle la valeur de dureté est lue 3 secondes après que le sabot de pression entre en contact avec l'éprouvette.

4. Polyuréthane thermoplastique selon l'une quelconque des revendications 1 à 3, dans lequel le polyester polyol est le poly(éthylène-adipate de 1,4-butylène)diol et a une masse moléculaire moyenne en nombre allant de 2,5 × 10³ g/mol à 3,5 × 10³ g/mol.

5. Polyuréthane thermoplastique selon l'une quelconque des revendications 1 à 3, dans lequel le polyester polyol est le poly(adipate de 1,3-propylène)diol et a une masse moléculaire moyenne en nombre allant de 1,8 × 10³ g/mol à 3,5 × 10³ g/mol.

6. Polyuréthane thermoplastique selon la revendication 1, dans lequel le diisocyanate organique est un diisocyanate aromatique.

7. Polyuréthane thermoplastique selon la revendication 6, dans lequel le diisocyanate organique est un diisocyanate de diphénylméthane.

8. Polyuréthane thermoplastique selon la revendication 7, dans lequel le diisocyanate organique est le diisocyanate de 4,4'-diphénylméthane.

9. Polyuréthane thermoplastique selon la revendication 1, dans lequel l'agent d'extension de chaîne glycol est l'éthylène glycol.

10. Polyuréthane thermoplastique selon l'une quelconque des revendications 1 à 3, dans lequel l'agent d'extension de chaîne glycol est l'éthylène glycol ; dans lequel le diisocyanate organique est le diisocyanate de 4,4'-diphénylméthane ; et dans lequel le polyol linéaire est dérivé d'acide adipique et de 1,3-propanediol (poly(adipate de 1,3-propylène)diol) et a une masse moléculaire moyenne en nombre allant de 1,5 × 10³ g/mol à 4,0 × 10³ g/mol, et plus préférablement allant de 1,8 × 10³ g/mol à 3,5 × 10³ g/mol.

11. Polyuréthane thermoplastique selon l'une quelconque des revendications 1 à 3, dans lequel l'agent d'extension de chaîne glycol est l'éthylène glycol ; dans lequel le diisocyanate organique est le diisocyanate de 4,4'-diphénylméthane ; et dans lequel le polyol linéaire est dérivé d'acide adipique et d'éthylène glycol et de 1,4-butanediol (poly(éthylène-adipate de 1,4-butylène)diol) et a une masse moléculaire moyenne en nombre allant de 2,2 × 10³ g/mol à 4,0 × 10³ g/mol, et plus préférablement de 2,5 × 10³ g/mol à 3,5 × 10³ g/mol.

12. Polyuréthane thermoplastique selon l'une quelconque des revendications 9 à 11, dans lequel l'éthylène glycol utilisé comme agent d'extension de chaîne est utilisé dans une quantité allant de 1,0 % en poids à 2,8 % en poids du poids total du polyuréthane thermoplastique.

13. Polyuréthane thermoplastique selon la revendication 12, dans lequel l'éthylène glycol est utilisé dans une quantité allant de 1,2 % en poids à 2,4 % en poids du poids total du polyuréthane thermoplastique.

14. Polyuréthane thermoplastique selon la revendication 13, dans lequel l'éthylène glycol est utilisé dans une quantité allant de 1,4 % en poids à 2,0 % en poids du poids total du polyuréthane thermoplastique.

15. Procédé de préparation d'articles moulés en polyuréthane thermoplastique, comprenant le moulage du polyuréthane thermoplastique selon l'une quelconque des revendications 1 à 14 par moulage par injection ou par extrusion.

16. Procédé en une seule étape de préparation d'un polyuréthane thermoplastique ayant une dureté Shore A de 60 ou moins, mesurée selon la méthode DIN 53505 dans laquelle la valeur de dureté est lue 3 secondes après que le sabot de pression entre en contact avec l'éprouvette, comprenant la synthèse du polyuréthane thermoplastique par polymérisation de i) un polyol linéaire, ii) un diisocyanate organique, et iii) un agent d'extension de chaîne glycol comprenant de l'éthylène glycol ou du 1,3-propanediol, ou des mélanges de ceux-ci ; éventuellement comprenant en outre du 1,4-butanediol, du 1,5-pentanediol, et/ou du 1,6-hexanediol en une quantité de pas plus de 10 pour cent en moles du nombre total de moles des agents d'extension de chaîne utilisés ; dans lequel le polyol linéaire (i) est un polyester polyol dérivé d'acide adipique et de 1,3-propanediol (poly(adipate de 1,3-propylène)diol) et a une masse moléculaire moyenne en nombre dans la plage de 1,5 × 10³ g/mol à 4,0 × 10³ g/mol, ou est dérivé d'acide adipique et d'éthylène glycol et de 1,4-butanediol (poly(éthylène-adipate de 1,4-butylène)diol) et a une masse moléculaire moyenne en nombre dans la plage de 2,2 × 10³ g/mol à 4,0 × 10³ g/mol.

17. Procédé selon la revendication 16, présentant n'importe lesquelles des caractéristiques additionnelles de l'une quelconque des revendications 2 à 14.
